Europäisches Patentamt

European Patent Office

Office européen des brevets

(19)

(11) Veröffentlichungsnummer: **0 310 874**
**A2**

## (12) EUROPÄISCHE PATENTANMELDUNG

(21) Anmeldenummer: **88115556.8**

(51) Int. Cl.⁴: **G01N 23/02**

(22) Anmeldetag: **22.09.88**

(30) Priorität: **26.09.87 DE 3732514**

(43) Veröffentlichungstag der Anmeldung:
**12.04.89 Patentblatt 89/15**

(84) Benannte Vertragsstaaten:
**AT BE CH DE ES FR GB GR IT LI LU NL SE**

(71) Anmelder: **Union Rheinische Braunkohlen
Kraftstoff Aktiengesellschaft
Ludwigshafener Strasse o. Nr. Postfach 1663
D-5047 Wesseling(DE)**

(72) Erfinder: **Heiskel, Georg
Hellweg 38
D-5354 Weilerswist(DE)**

(54) **Verbessertes Verfahren zur Prüfung von Rohrleitungen.**

(57) Die Erfindung betrifft ein verbessertes Verfahren zur Prüfung von Rohrleitungen an Auflagestellen und im Bereich von Rohrschellen mit γ- und/oder Röntgen-Strahlen.

EP 0 310 874 A2

## Verbessertes Verfahren zur Prüfung von Rohrleitungen

Die Erfindung betrifft ein verbessertes Verfahren zur Prüfung von Rohrleitungen an Auflagestellen und im Bereich von Rohrschellen.

Es ist bekannt, daß Rohrleitungen, insbesondere solche, die in Betrieb sind, aber auch außer Betrieb befindliche, korrosivem Angriff ausgesetzt sind. Es ist daher zwingend erforderlich, den Zustand des Rohrmaterials laufend sorgfältig zu kontrollieren.

Korrosionsangriff kann vor allem an den Auflagestellen, wie z.B. auf Rohrbrücken und unter Rohrschellen, eintreten. Aber auch beispielsweise unter dem vorhandenen Farbanstrich und an der Innenoberfläche der Rohre im Bereich der Auflagestellen und Rohrschellen kann Korrosion eintreten.

Durch physikalische Untersuchungsmethoden kann festgestellt werden, ob die Rohrleitungen frei von Korrosion sind, oder ob leichter, mittlerer oder starker korrosiver Angriff vorliegt. Hierbei ist auch die Rohr-Restwanddicke zu ermitteln.

Es ist bekannt, daß solche Meßungen durch Ultraschallprüfung durchgeführt werden können (DECHEMA-Informationsblatt ZFP2 -Februar 1984, "Prüfung von Rohrleitungen aus metallischen Werkstoffen auf Korrosionsschäden").

Hierzu müssen die Rohre bei Messungen an Auflagestellen um mindestens 100 mm angehoben und an den zu untersuchenden Stellen durch Anschleifen prüffähig gemacht werden.

Es ist auch bekannt, zur Ermittlung von abtragender Korrosion, sogenannte $\gamma$-Strahlen-Durchstrahlungsaufnahmen durchzuführen (DECHEMA-Informationsblatt ZFP2 - Februar 1984, "Prüfung von Rohrleitungen aus metallischen Werkstoffen auf Korrosionsschäden").

Auch diese Untersuchungen sind nach dem Stand der Technik nur an freiliegenden Rohrleitungen durchführbar, d.h., aufliegende Rohrleitungen müssen um mindestens 50 mm über die Auflagestelle angehoben werden.

Rohrschellen müssen um Prüfungen an den darunter liegenden Teilen der Rohrleitungen durchzuführen, entfernt werden. Hierzu müssen die Rohrleitungen zunächst abgestützt werden.

Das Anheben von Rohrleitungen ist meistens mit erheblichem Aufwand verbunden, da die Leitungen außer Betrieb genommen werden müssen, gespült, abgeflanscht und - je nach Rohrgröße -durch schweres Gerät angehoben werden müssen. Dies hat darüber hinaus zur Folge, daß die mit der Rohrleitung in Verbindung stehende Anlage abgestellt werden muß und entsprechende Produktionseinbußen eintreten.

Ein weiterer Nachteil der genannten Prüfverfahren ist die Gefahr, daß beim Anheben ein Durchbruch der Leitungen an den korrodierten Stellen erfolgt. Dies kann auch dann sehr leicht geschehen, wenn das Anheben beispielsweise durch Einschlagen von Keilen zwischen Rohrleitungen und Auflagevorrichtung geschieht.

Obgleich in zahllosen Anlagen Rohrleitungsprüfungen durchgeführt werden, steht dem Fachmann trotz der genannten Probleme bisher kein Prüfverfahren zur Verfügung, das es erlaubt, Rohrleitungen zu untersuchen, ohne daß die Rohre freigelegt werden müssen und ohne daß die mit der zu untersuchenden Leitung in Verbindung stehenden Anlagen außer Betrieb genommen werden müssen.

Die vorliegende Erfindung stellt nunmehr ein verbessertes Verfahren zur Ermittlung von Korrosion durch Durchstrahlung von auf Auflagestellen aufliegenden Rohrleitungen im Bereich der Auflagestellen und von Rohrschellen mit $\gamma$- und/oder Röntgen-Strahlen und üblicher Belichtung eines Films oder eines sonstigen Strahlungsempfängers mit den $\gamma$ - und/oder Röntgen-Strahlen zur Verfügung, das diese Aufgabe löst, dadurch gekennzeichnet, daß

a, die $\gamma$- und/oder Röntgen-Strahlenquelle auf einer Seite der Rohrleitung seitlich von der Auflagevorrichtung angebracht wird und auf der anderen Seite der Rohrleitung auf der gegenüberliegenden Seite der Auflagevorrichtung ein zu belichtender Film angebracht wird, wobei die zentrale Verbindungslinie zwischen Strahlenquelle und Film mit der Rohrleitungslänge einen Winkel bildet von 30° bis 75°;

der Strahler in einer derartigen vertikalen Position zur Auflagefläche angebracht wird, daß die Unterkante des Strahlers bis zu 0,5 D unterhalb der Auflagefläche bis 1 D oberhalb der Auflagefläche angebracht wird, bevorzugt bis zu 0,25 D unterhalb bis 0,5 D oberhalb der Auflagefläche angebracht wird, wobei D der Durchmesser des Strahlers ist;

der Film in einer solchen Position angebracht wird, daß ein Bild ausreichender Schwärzung entsteht;

daß Strahlungsquelle und/oder Film maximal 100 cm, bevorzugt < 50 cm von dem äußeren Schnittpunkt von Auflagefläche und Rohrleitung entfernt angebracht werden und

bevorzugt mindestens zwei Bilder in der Weise aufgenommen werden, daß bei der ersten Aufnahme wie angegeben vorgegangen wird und bei dem zweiten Bild eine Aufnahme erfolgt, zu der die Strahlungsquelle

POOR QUALITY          EP 0 310 874 A2

und der Film auf der gleichen Rohrseite, jedoch auf der jeweils gegenüberliegenden Seite der Auflagestelle angebracht werden oder bei der die Strahlungsquelle und der Film auf der jeweils gegenüberliegenden Seite der Rohrleitung und auf der gegenüberliegenden Seite der Auflagevorrichtung angebracht werden, und

b, die γ- und/oder Röntgen-Strahlenquelle auf einer Seite der Rohrleitung seitlich von der Rohrschelle angebracht wird und auf der anderen Seite der Rohrleitung auf der gegen überliegenden Seite der Rohrschelle ein zu belichtender Film angebracht wird, wobei die zentrale Verbindungslinie zwischen Strahlenquelle und Film mit der Rohrleitungslängsachse einen Winkel bildet von 30° - 75°, vorzugsweise 50° - 70°;

daß der Strahler in einer derartigen vertikalen Position zum zu prüfenden Rohrschellenbereich angebracht wird, daß die Mitte des Strahlers bis zu 25 D unterhalb der inneren Rohrschellenfläche bis 25 D oberhalb der inneren Rohrschellenfläche angebracht wird, bevorzugt bis zu 10 D unterhalb bis 10 D oberhalb der inneren Rohrschellenfläche angebracht wird, wobei D der Durchmesser des Strahlers ist;

daß der Film in einer solchen Position angebracht wird,

daß ein Bild ausreichender Schwärzung entsteht;

daß Strahlungsquelle und/oder Film maximal 100 cm, bevorzugt < 50 cm von dem Schnittpunkt Rohrschelle/Rohrleitung entfernt, angebracht werden;

daß in Abhängigkeit von der Breite der Rohrschelle in Fällen breiterer Rohrschellen bevorzugt zwei Bilder in der Weise aufgenommen werden, daß bei der ersten Aufnahme wie angegeben vorgegangen wird und bei dem zweiten Bild eine Aufnahme erfolgt, zu der die Strahlungsquelle und der Film auf der gleichen Rohrseite, jedoch auf der gegenüberliegenden Seite der Rohrschelle angebracht werden oder bei der die Strahlungsquelle und der Film auf der jeweils gegenüberliegenden Seite der Rohrleitung und auf der gegenüberliegenden Seite der Rohrschelle angebracht werden.

Analoges gilt selbstverständlich wenn Rohrleitung und Auflage keinen rechten Winkel bilden.

Die Erfindung stellt ferner eine verbesserte Vorrichtung zur Ermittlung von Korrosion durch Durchstrahlung von auf Auflagevorrichtungen aufliegenden oder in Rohrschellen liegenden Rohrleitungen, im Bereich der Auflagestellen, mit γ- und/oder Röntgen-Strahlen und üblicher Belichtung eines Films oder eines sonstigen Strahlungsempfängers durch die γ-Strahlen und/oder Röntgenstrahlen dadurch gekennzeichnet, daß

a, die γ- und/oder Röntgen-Strahlenquelle auf einer Seite der Rohrleitung seitlich von der Auflagevorrichtung angebracht ist und auf der anderen Seite der Rohrleitung auf der gegenüberliegenden Seite der Auflagevorrichtung ein zu belichtender Film angebracht ist, wobei die zentrale Verbindungslinie zwischen γ- und/oder Röntgen-Strahlenquelle und Film mit der Rohrleitungslängsachse einen Winkel von 30° bis 75° bildet;

daß der Strahler in einer derartigen vertikalen Position zur Auflagefläche angebracht ist, daß sich die Unterkante des Strahlers bis zu 0,5 D unterhalb der Auflagefläche bis 1 D oberhalb der Auflagefläche befindet, bevorzugt bis zu 0,25 D unterhalb bis 0,5 D oberhalb der Auflagefläche befindet, wobei D der Durchmesser des Strahlers ist;

daß sich der Film gegenüber in einer solchen Position befindet, daß ein Bild ausreichender Schwärzung entsteht; daß sich Strahlungsquelle und/oder Film maximal 100 cm, bevorzugt < 50 cm von dem äußeren Schnittpunkt von Auflagefläche und Rohrleitung entfernt befinden und

daß zur bevorzugten Aufnahme von mindestens zwei Bildern, bei der ersten Aufnahme die angegebene Anordnung vorliegt und bei dem zweiten Bild sich Strahlungsquelle und der Film auf der gleichen Rohrseite jedoch auf der gegenüberliegenden Seite der Auflagestelle befinden oder bei der sich die Strahlungsquelle und der Film auf der jeweils gegenüberliegenden Seite der Rohrleitung und auf der gegenüberliegenden Seite der Auflagevorrichtung befinden und

b, die γ - und/oder Röntgen-Strahlenquelle auf einer Seite der Rohrleitung seitlich von der Rohrschelle angebracht ist und auf der anderen Seite der Rohrleitung auf der gegenüberliegenden Seite der Rohrschelle ein zu belichtender Film angebracht ist, wobei die zentrale Verbindungslinie zwischen γ- und/oder Röntgen-Strahlenquelle und Film mit der Rohrleitungslängsachse einen Winkel von 30° bis 75°, bevorzugt 50° bis 70° bildet;

der Strahler in einer derartigen Position zum zu prüfenden Rohrschellenbereich angebracht ist, daß die Unterkante des Strahlers bis zu 25 D in Richtung der Verbindungslinie Rohrwand/Rohrschelle unterhalb der inneren Rohrschellenfläche bis 25 D oberhalb der inneren Rohrschellenfläche angebracht ist, bevorzugt bis zu 10 D unterhalb bis 10 D oberhalb der inneren Rohrschellenfläche angebracht ist, wobei D der Durchmesser des Strahlers ist;

der Film in einer solchen Position angebracht ist, daß ein Bild ausreichender Schwärzung entsteht;

Strahlungsquelle und/oder Film maximal 100 cm, bevorzugt < 50 cm von dem Kontaktpunkt

3

Rohrschelle/Rohrleitung entfernt, angebracht ist;
in Abhängigkeit von der Breite der Rohrschelle in Fällen breiterer Rohrschellen zur bevorzugten Aufnahme von mindestens zwei Bildern bei der ersten Aufnahme die angegebene Vorrichtung vorliegt und bei dem zweiten Bild Strahlungsquelle und Film auf der gleichen Seite der Rohrleitung jedoch auf der gegenüberliegenden Seite der Rohrschelle angebracht sind oder bei der die Strahlungsquelle und der Film auf der jeweils gegenüberliegenden Seite der Rohrleitung und auf der gegenüberliegenden Seite der Rohrschelle angebracht sind.

Leitungsrohre werden häufig über Rohrbrücken oder andere Traversen geführt und liegen an bestimmten Stellen auf diesen auf. Gemäß vorliegender Erfindung kann der Auflagebereich an Rohraußen- und -innenseite zuverlässig darauf geprüft werden, ob in diesem Bereich Korrosion oder sonstige Abtragungen vorliegen.

Häufig sind Rohrleitungen auch durch Rohrschellen befestigt. Dies kann durch hängende Rohrschellen, durch seitlich befestigte oder auch unter der Rohrleitung befestigte Rohrschellen erfolgen.

Die unter der Rohrschelle liegende Rohrleitungsfläche kann nach dem Stand der Technik nur in der Weise untersucht werden, daß man die Rohrleitung provisorisch auf andere Weise befestigt und anschließend die Rohrschelle entfernt.

Auch hier bietet die vorliegende Erfindung eine sehr wesentliche Verbesserung, daß man nämlich durch die sowohl tangentiale als auch diagonale Durchstrahlung den unter der Rohrschelle liegenden Bereich untersuchen kann, ohne die oben genannten vorbereitenden Arbeiten ausführen zu müssen.

Als Untersuchungsmethode werden die an sich bekannte Durchstrahlung des Auflagebereichs bzw. des Rohrschellenbereichs und die Aufnahme eines Filmbildes angewandt. Bei dem erfindungsgemäßen Verfahren ist jedoch kein Anheben des Rohres von der Auflage, kein Reinigen und Abschleifen der zu untersuchenden Stelle und kein Abstellen der Anlage erforderlich, mit der die Rohrleitungen verbunden sind, noch sind, wie bereits ausgeführt, vorbereitende Arbeiten im Rohrschellenbereich erforderlich.

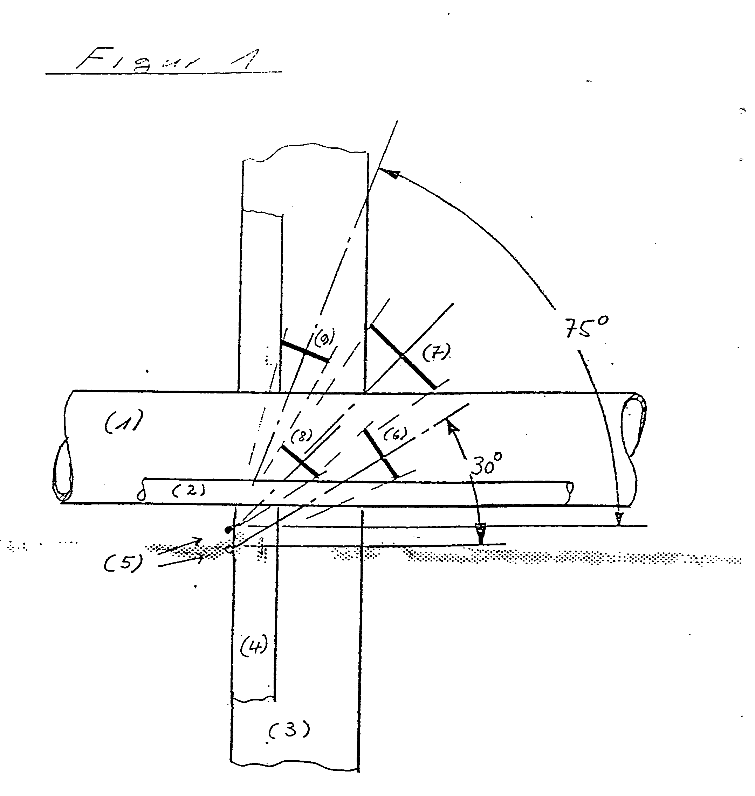

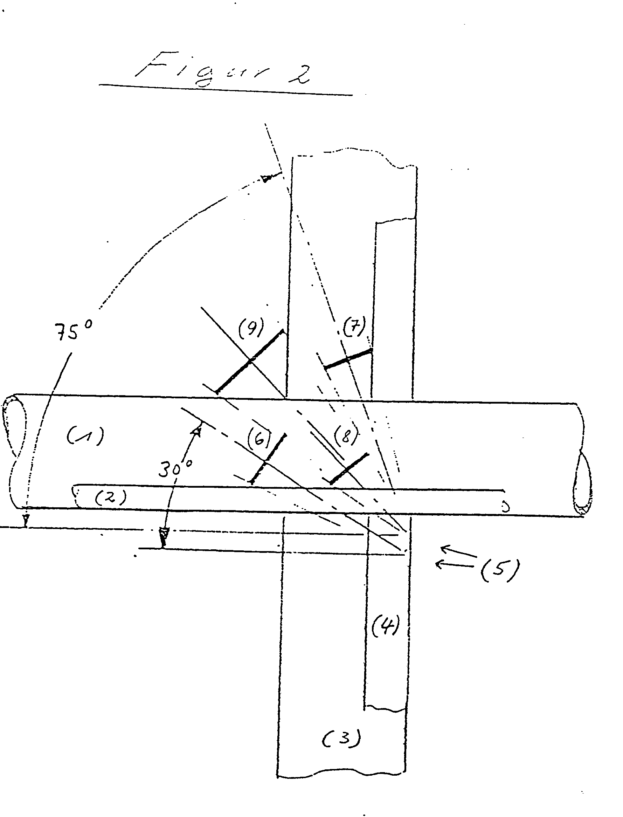

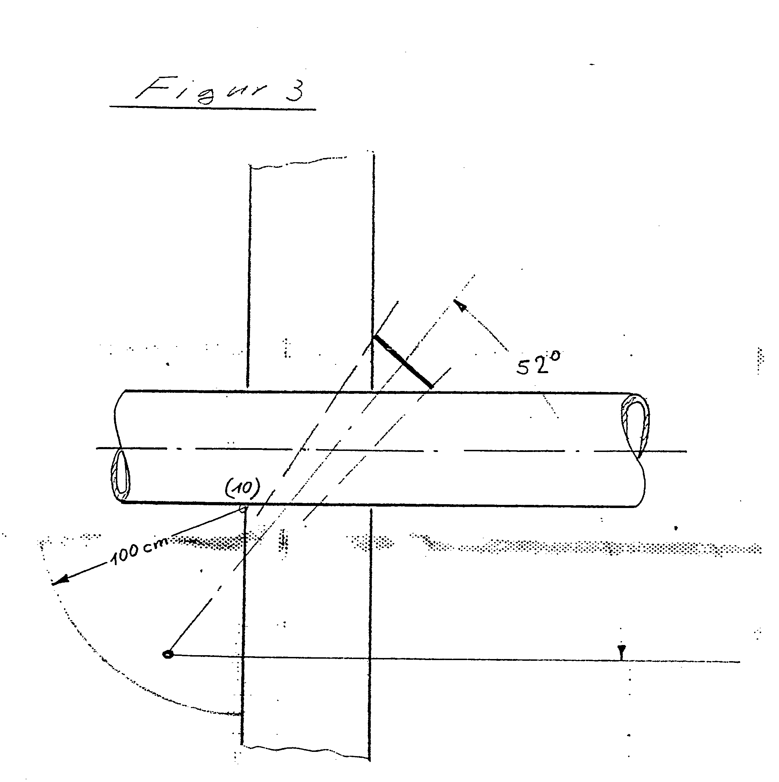

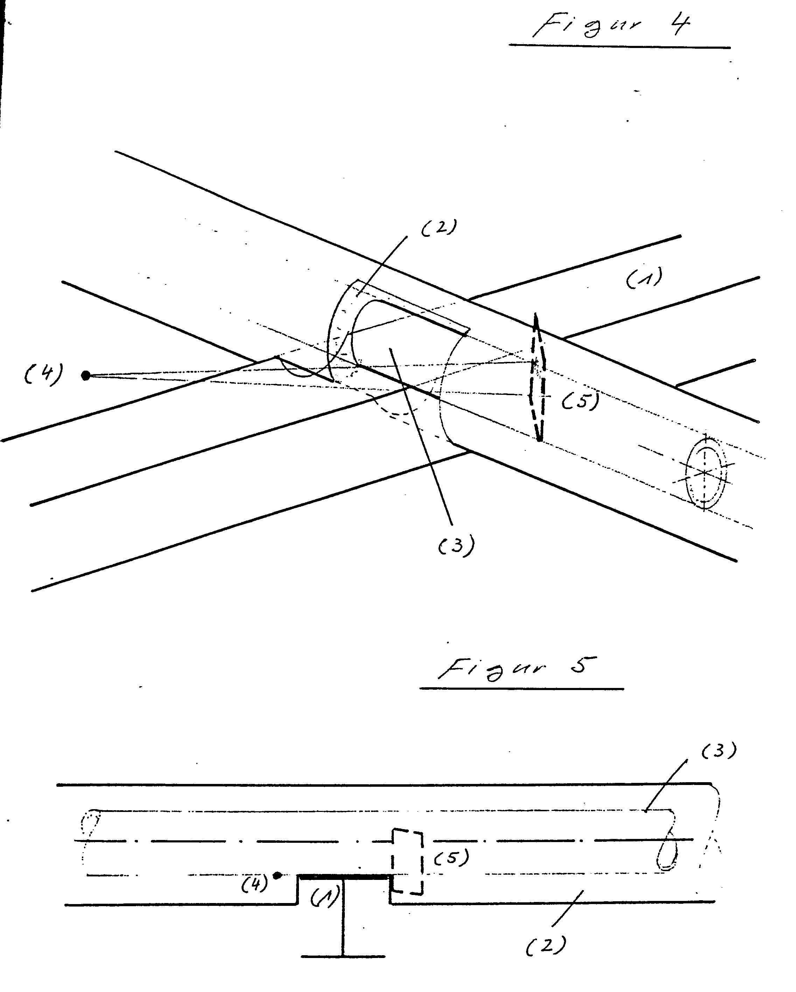

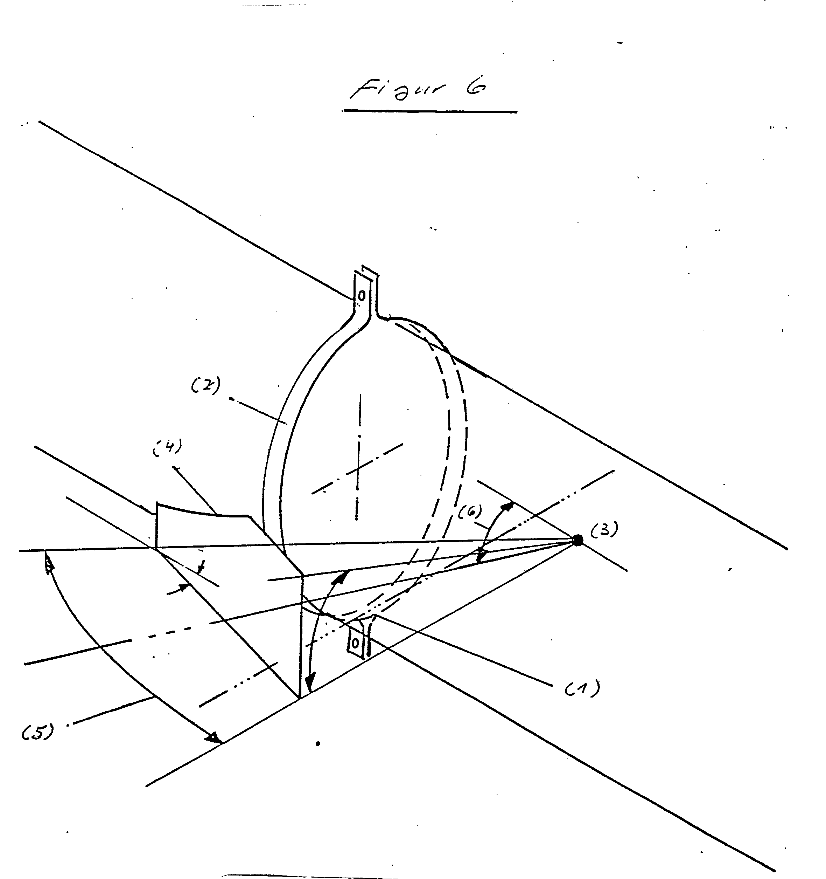

In den Figuren 1 - 6 sind beispielhaft erfindungsgemäße Anordnungen dargestellt.

$\gamma$ - und Röntgenstrahlungsquellen für Korrosionsuntersuchungen sind an sich bekannt. Im Falle von $\gamma$-Strahlungsquellen handelt es sich üblicherweise um kleine radioaktive Stäbchen von wenigen Millimetern Durchmesser aus einem radioaktiven Material wie beispielsweise Iridium oder Kobalt, aber auch andere radioaktive Materialien können eingesetzt werden. Die Strahlungsquelle selbst ist in einem Arbeits- und Transport-Behälter untergebracht, der diese ummantelt, wobei üblicherweise bei Durchstrahlungsuntersuchungen die Strahlungsquelle beispielsweise mit Hilfe einer Fernbedienung aus dem Behälter heraus durch einen Ausfahrschlauch oder beispielsweise durch ein Ausfahrrohr in die Strahlungsposition z.B. die Ausfahrspitze geschoben wird.

Die ummantelte Strahlungsquelle wird vorteilhaft mit einer Halterung in eine feste Position an einer Rohrleitungsseite und seitlich zur Auflagevorrichtung gebracht. Auf der gegenüberliegenden Seite wird ein Film in der Weise, üblicherweise ebenfalls mit einer festen Halterung, angebracht, daß die Strahlen der Strahlungsquelle auf dem Film ein Bild ausreichender Schwärzung erzeugen können.

Als Filme können Röntgenfilme verwendet werden. Bevorzugt wird eine Röntgenfilm-Verstärkerfolien-Kombination. Hierdurch lassen sich die Belichtungszeiten, ausgehend von den üblichen Werten, um wenigstens 80 % reduzieren. Dies hat die vorteilhafte Wirkung, daß die Strahlenbelastung des Prüfpersonals nur gering ist, da sie nur kurzzeitig und nur auf einen kleinen Raum begrenzt ist.

Es können jedoch auch andere Vorrichtungen zum Empfang und zur Registrierung der Strahlen eingesetzt werden, wie beispielsweise alle für radioaktive Strahlung eingesetzten Vorrichtungen, beispielsweise nach dem Geigerzählerprinzip arbeitende Vorrichtungen. Erfindungswesentlich ist, daß die Strahlen sowohl tangential als auch diagonal unter den angegebenen Bedingungen auf die zu prüfende Stelle auftreffen.

Intensität und Wellenlängen der Strahlungsquellen für Korrosionsuntersuchungen an Rohrleitungen sind dem Fachmann bekannt und brauchen nicht näher erläutert zu werden. Die erfindungsgemäß einsetzbaren Strahlungsquellen können, wie dem Fachmann bekannt ist, unterschiedliche Strahlungsaktivität besitzen. Bevorzugt ist eine $\gamma$-Strahlungsquelle, die auch unterschiedliche Aktivität besitzen kann.

Nach dem erfindungsgemäßen Verfahren wird die Strahlungsquelle, die sich wie beschrieben, üblicherweise in einem Behälter befindet, in der Weise in Position gebracht, z.B. mit einer Halterung an der Auflagevorrichtung, jedoch auch mit beliebigen sonstigen Halterungen, daß die zentrale Verbindungslinie zwischen Strahlungsquelle und Film mit der Rohrleitungslängsachse einen Winkel von 30° bis 75° bildet.

Die Strahlungsquelle muß sich, wie die Untersuchungen der Anmelderin gezeigt haben, um ausreichend scharfe Bilder zu erhalten, bis zu 0,5 D unterhalb der Auflagefläche befinden bis 1 D oberhalb der Auflagefläche. Bevorzugt befindet sich die Strahlungsquelle bis zu 0,25 D unterhalb bis zu 0,5 D oberhalb der Auflagefläche, wobei sie sich auch zentral auf der Höhe der Auflage befinden kann. D ist der Durchmesser der Strahlungsquelle.

Hat die Strahlungsquelle z.B. einen Durchmesser von 1,6 mm, so kann sich die Unterkante der Strahlungsquelle bis maximal 0,8 mm, bevorzugt 0,4 mm unterhalb der Auflagefläche befinden. Andererseits kann sich die Unterkante bis maximal 1,6 mm oberhalb der Auflagefläche bevorzugt 0,8 mm oberhalb der Höhe der Auflagefläche befinden.

Analoges gilt für die Messungen unter Rohrschellen. Hier ist die Strahlenquelle in einer derartigen Position zum zu prüfenden Bereich angebracht, daß die Mitte des Strahlers sich bezüglich der Verbindungslinie Rohrwand/Rohrschelle an der zu prüfenden Stelle bis zu 25 D unterhalb derselben und bis 25 D oberhalb derselben befindet, bevorzugt bis zu 10 D unterhalb bis 10 D oberhalb dieser Linie, wobei D der Durchmesser des Strahlers ist.

Die Strahlungsquelle kann sich hierbei vorteilhafterweise zentral auf der Höhe dieser Linie und nahe an der Auflagestelle befinden. Im Falle von Rohrschellen kann erfindungsgemäß um das ganze Rohr herum die jeweils unter der Rohrschelle liegende Fläche geprüft werden, ohne daß die oben genannten vorbereitenden Tätigkeiten erforderlich sind.

Der Abstand von Strahlungsquelle sowie vom Film zu dem Schnittpunkt, den Rohrleitung und Auflagefläche bilden, bzw. der Kontaktpunkt äußere Rohrwand/innere Rohrschellenfläche kann für Strahlungsquelle und/oder Film maximal 100 cm, bevorzugt < 50 cm betragen, wobei möglichst kurze Abstände bevorzugt sind.

Strahlungsquelle und Film können sich daher auf der angegebenen Höhe in einem Segment mit einem Radius von 100 cm oder weniger befinden.

Der Film wird in einer solchen Weise angebracht, daß die Schwärzung ausreicht, um die Korrosionsbereiche erkennen zu können. Bevorzugt ist der Film senkrecht zur zentralen Verbindungslinie zwischen Strahlungsquelle und Röntgenfilmmitte angebracht. Bevorzugt werden zwei Durchstrahlungsaufnahmen gemacht. Grundsätzlich können jedoch auch mehrere Aufnahmen gemacht werden. Es ist zu berücksichtigen, daß eine einzige Aufnahme aus nur einer Richtung häufig kein Ergebnis liefert, das verläßlich auswertbar ist, außer in Fällen, in denen die Auflagefläche genügend klein ist bzw. die Auflagevorrichtung sehr schmal ist. Analoges gilt für die Prüfung im Rohrschellenbereich, wobei nur bei genügend schmalen Rohrschellen eine einzige Aufnahme genügt.

Bei Aufnahme von 2 Bildern geht man bevorzugt in der Weise vor, daß man bei der zweiten Aufnahme Strahlungsquelle und Film auf der jeweils gegenüberliegenden Seite zur Auflagevorrichtung bzw. zum zu prüfenden Rohrschellenbereich, jedoch auf der gleichen Seite der Rohrleitung oder auf der jeweils gegenüberliegenden Seite der Rohrleitung und auf der gegenüberliegenden Seite der Auflagevorrichtung bzw. zum zu prüfenden Rohrschellenbereich in Position bringt.

Die besonders vorteilhafte Wirkung des erfindungsgemäßen Verfahrens im Auflagebereich beruht darauf, daß man die Rohrleitungen nicht von der Auflagevorrichtung anzuheben braucht. Die Rohrleitung braucht weder gespült, noch brauchen Rohrleitungsflansche geöffnet werden, noch sind Blinddeckel zu setzen. Insbesondere hat die erfindungsgemäße Prüfung keine Auswirkung auf den Betrieb der Anlage(n), mit der bzw. denen die Rohrleitung in Verbindung steht, d.h., die Prüfung kann bei in Betrieb befindlicher Anlage durchgeführt werden. Analoges gilt für Prüfungen im Rohrschellenbereich. Auch hier sind keine vorbereitenden Arbeiten, wie provisorische Befestigung der Rohrleitung und Öffnen der Rohrschelle erforderlich.

Anhand eines realistischen Beispiels seien hier Rohrleitungen einer Ethylenanlage betrachtet, deren Korrosionsprüfung es erforderlich macht, die Ethylenanlage mit einer Ethylenkapazität von 200.000 tato für 10 Tage außer Betrieb zu nehmen. Bei Durchführung einer erfindungsgemäßen Prüfung, bei der diese Außerbetriebnahme nicht erforderlich ist, ergibt sich - bezogen auf während der Prüfdauer produziertes Ethylen - eine Umsatzersparnis im Werte von ca. 6.000 t Ethylen oder größenordnungsmäßig von 6 Millionen DM.

Diese Betrachtung ist nur als beispielhaft anzusehen, da erfindungsgemäß Rohrleitungen jeder beliebigen Anlage geprüft werden können. Sie macht jedoch deutlich, welche Bedeutung das vorliegende Verfahren besitzt.

Die Untersuchungen der Anmelderin haben ergeben, daß Rohrleitungen mit innerem Durchmesser von 30 mm bis 300 mm, bevorzugt von 50 mm bis 250 mm, sehr exakt geprüft werden können.

Die Dicke der Rohrleitungswand ist für die Prüfung auf Außenkorrosion an Auflagestellen oder unter Rohrschellen ohne Bedeutung, da sich aus den Filmaufnahmen das Ausmaß der Korrosion errechnen läßt.

Wird die Korrosion jedoch auf die Weise ermittelt, daß man auf der Filmaufnahme beispielsweise mit einer Schublehre das Ausmaß der Korrosion direkt messen möchte, so muß die Kontur der Rohrleitungsinnenwand erkennbar sein. In diesem Falle sollte die Rohrleitungswand nicht stärker als 20 mm sein, wobei die untere Grenze der Wandstärke im allgemeinen nicht kleiner als 1 mm ist. Bevorzugt sollte die Rohrleitungswandstärke 1 -12 mm betragen.

Diese Wandstärken gelten auch für den Fall der Prüfung auf Innenkorrosion.

Geht man im Falle von Rohrschellen beispielhaft von einer Schellenbreite von 30 - 60 mm und einer Schellendicke von 5 - 10 mm aus, so sollte die Rohrleitungswanddicke ebenfalls bevorzugt bei 1 - 12 mm liegen.

Es ist allgemein bekannt, daß die Qualität von γ-Durchstrahlungsaufnahmen auch von dem durch die Rohrleitungen fließenden Medium abhängt. In gewissem bzw. vergleichbarem Umfang gilt dies auch für Messungen gemäß vorliegender Erfindung.

Die Rohrmaterialien können beliebige Materialien sein, insbesondere die üblichen Materialien aus Eisen, unlegiertem und legiertem Stahl, aber auch sonstige Metalle bzw. Legierungen.

Erfindungsgemäß brauchen zur Prüfung Rohrisolierungen nicht entfernt werden. Ferner sind Reinigung, Abschleifen, Entfernen von Farbe und dergl. nicht erforderlich. Gemäß vorliegender Erfindung können nicht nur der Auflagebereich und Rohrschellenbereich selbst, sondern auch dessen nahe Umgebung auf Korrosion geprüft werden. Aus dem (den) belichteten Röntgenfilm(en) kann die Dicke des Rohres zuverlässig dadurch ermittelt werden, daß die vor Ort gemessenen Abstände vom Strahler bis zur Rohrmitte und vom Strahler bis zum Röntgenfilm in Beziehung gesetzt werden zur wirklichen Wanddicke und zur abgebildeten Wanddicke. Flächenabtrag, Muldenfraß und Lochfraß und andere Formen der Korrosion lassen sich erfindungsgemäß zuverlässig ermitteln.

Mit Hilfe der Figuren wird die Erfindung näher erläutert.

In Figur 1 stellt (1) eine 250 mm Rohrleitung, (2) eine 50 mm Rohrleitung dar. (3) ist eine breite, (4) eine schmale Auflagevorrichtung, (5) sind Strahlungsquelle und (6) - (9) sind (Röntgen-)Filme. Die angegebenen Winkel werden durch die Rohrleitungslängsachse und die zentrale Verbindung zwischen Strahlungsquelle und (Röntgen-)Film-Mittelpunkt gebildet.

In Figur 2 ist die zweite Bildaufnahme-Vorrichtung dargestellt, bei der sich Strahlungsquelle und (Röntgen-)Film auf der gegen überliegenden Seite der Auflagevorrichtung befinden.

In Figur 3 ist die Position der Strahlungsquelle in dem beschriebenen Segment von 100 cm Abstand von dem Schnittpunkt (10) dargestellt.

In den Figuren 4 und 5 sind isolierte Rohrleitungen dargestellt. Die Rohrleitungen liegen auf den Auflagevorrichtungen auf. An den Auflagestellen sind entsprechende Segmente aus den Isolierungen herausgeschnitten.

(1) stellt jeweils die Auflagevorrichtung dar, (2) die Isolierung, (3) die Rohrleitung, (4) die Strahlungsquelle und (5) den hinter der isolierten Rohrleitung angebrachten Film bzw. sonstige Empfangsvorrichtung.

In Figur 6 ist eine typische Korrosionsprüfung unter einer Rohrschelle dargestellt.

(1) stellt die Rohrleitung im Bereich des zu prüfenden Bereichs dar, (2) die Rohrschelle, (3) die Strahlungsquelle. (4) kennzeichnet den Röntgenfilm. (5) ist der Öffnungswinkel des Strahlenbündels in der Ebene der Rohrlängsrichtung. (6) stellt den Winkel des zentralen γ-Strahls in Richtung Filmmitte zur Rohrlängsrichtung dar.

In der Tabelle sind einige Ergebnisse des erfindungsgemäßen Verfahrens zusammengefaßt. In der 2. Spalte von rechts sind Restrohrwanddicken angegeben, die durch das erfindungsgemäße Verfahren errechnet wurden. Sie sind zu vergleichen mit den durch mechanisches Ausmessen der Korrosion erhaltenen Werten in der Spalte ganz rechts, nachdem die Rohre von den Auflagestellen entfernt wurden.

Es ist ersichtlich, daß das erfindungsgemäße Verfahren ausgezeichnete Ergebnisse liefert.

**Vergleich der Auswertungen**

**von an Rohrauflagestellen in der Rohrbrücke angefertigten γ-Strahlenaufnahmen zu den mechanischen Meßwerten am entsprechenden Rohrabschnitt**

| Probe Nr. | Rohr- Nenn-weite mm | Rohr- Wand-dicke mm | Auflage-breite mm | Beurteilung des Korrosionsangriffes an der Außenoberfläche im Auflagebereich | Unterrostung des Farbanstriches | Innen-oberfläche | Rest-Rohrwanddicke gemessen nach dem URBK-Verf. mm | mechanisch gemessene Rest-Rohrwanddicke mm |
|---|---|---|---|---|---|---|---|---|
| 5 | 250 | 6,0 | 70 | mittel-stark | - | - | 4,2 | 4,3 |
| 14 | 100 | 4,0 | 160 | stark | - | - | 2,1 | 2,2 |
| 35 | 100 | 4,0 | 160 | mittel | - | - | 2,7 | 2,7 |
| 52 | 100 | 4,0 | 160 | stark, beinahe Durchbruch | ja | - | 0,8 | 0,8 |
| 82 | 80 | 4,0 | 220 | stark | ja | - | 2,1 | 2,0 |
| 59 | 150 | 5,5 | 220 | - | - | stark | 3,7 | 3,5 |
| | | | Rohrschellenbreite | Außenoberfläche der Rohrleitung im Rohrschellenbereich | | | | |
| 62 | 250 | 10,0 | 50 | mittel-stark | - | - | 4,5 | 4,5 |

**POOR QUALITY**

**Ansprüche**

1. Verbessertes Verfahren zur Ermittlung von Korrosion durch Durchstrahlung von auf Auflagevorrichtungen aufliegenden oder in Rohrschellen liegenden Rohrleitungen im Bereich der Auflagestellen mit γ-Strahlen und/oder Röntgen-Strahlen und Belichtung eines Films oder eines sonstigen Strahlenempfängers durch q-Strahlen und/oder Röntgen-Strahlen, dadurch gekennzeichnet, daß

a, die γ- und/oder Röntgen-Strahlenquelle auf einer Seite der Rohrleitung seitlich von der Auflagevorrichtung angebracht wird und auf der anderen Seite der Rohrleitung auf der gegenüberliegenden Seite der Auflagevorrichtung ein zu belichtender Film angebracht wird, wobei die zentrale Verbindungslinie zwischen Strahlenquelle und Film mit der Rohrleitungslängsachse einen Winkel bildet von 30° bis 75°; der Strahler in einer derartigen vertikalen Position zur Auflagefläche angebracht wird, daß die Unterkante des Strahlers bis zu 0,5 D unterhalb der Auflagefläche bis 1 D oberhalb der Auflagefläche angebracht wird, bevorzugt bis zu 0,25 D unterhalb bis 0,5 D oberhalb der Auflagefläche angebracht wird, wobei D der Durchmesser des Strahlers ist; der Film in einer solchen Position angebracht wird, daß ein Bild ausreichender Schwärzung entsteht; daß Strahlenquelle und/oder Film maximal 100 cm, bevorzugt < 50 cm von dem äußeren Schnittpunkt von Auflagefläche und Rohrleitung entfernt angebracht werden und bevorzugt mindestens zwei Bilder in der Weise aufgenommen werden, daß bei der ersten Aufnahme wie angegeben vorgegangen wird und bei dem zweiten Bild eine Aufnahme erfolgt, zu der die Strahlungsquelle und der Film auf der gleichen Rohrseite, jedoch auf der jeweils gegenüberliegenden Seite der Auflagestelle angebracht werden oder bei der die Strahlungsquelle und der Film auf der jeweils gegenüberliegenden Seite der Rohrleitung und auf der gegenüberliegenden Seite der Auflagevorrichtung angebracht werden, und

b, die γ- und/oder Röntgen-Strahlenquelle auf einer Seite der Rohrleitung seitlich von der Rohrschelle angebracht wird und auf der anderen Seite der Rohrleitung auf der gegenüberliegenden Seite der Rohrschelle ein zu belichtender Film angebracht wird, wobei die zentrale Verbindungslinie zwischen Strahlenquelle und Film mit der Rohrleitungslängsachse einen Winkel bildet von 30 - 75°, vorzugsweise von 50 - 70°; daß der Strahler in einer derartigen vertikalen Position zum zu prüfenden Rohrschellenbereich angebracht wird, daß die Mitte des Strahlers bis zu 25 D unterhalb der inneren Rohrschellenfläche bis 25 D oberhalb der inneren Rohrschellenfläche angebracht wird, bevorzugt bis zu 10 D unterhalb bis 10 D oberhalb der inneren Rohrschellenfläche angebracht wird, wobei D der Durchmesser des Strahlers ist; daß der Film in einer solchen Position angebracht wird, daß ein Bild ausreichender Schwärzung entsteht; daß Strahlungsquelle und/oder Film maximal 100 cm, bevorzugt < 50 cm von dem Schnittpunkt Rohrschelle/Rohrleitung entfernt, angebracht werden, daß in Abhängigkeit von der Breite der Rohrschelle in Fällen breiterer Rohrschellen bevorzugt zwei Bilder in der Weise aufgenommen werden, daß bei der ersten Aufnahme wie angegeben vorgegangen wird und bei dem zweiten Bild eine Aufnahme erfolgt, zu der die Strahlungsquelle und der Film auf der gleichen Rohrseite, jedoch auf der gegenüberliegenden Seite der Rohrschelle angebracht werden oder bei der die Strahlungsquelle und der Film auf der jeweils gegenüberliegenden Seite der Rohrleitung und auf der gegenüberliegenden Seite der Rohrschelle angebracht werden.

2. Verfahren nach Anspruch 1, dadurch gekennzeichnet, daß eine γ-Strahlungsquelle eingesetzt wird.

3. Verfahren nach den Ansprüchen 1 und 2, dadurch gekennzeichnet, daß an der Austrittsseite der γ- und/oder Röntgen-Strahlen eine Film-Verstärkerfolien-Kombination verwendet wird.

4. Verfahren nach den Ansprüchen 1 - 3, dadurch gekennzeichnet, daß Rohrleitungen mit Normweiten von 30 bis 300 mm durchstrahlt werden.

5. Verfahren nach den Ansprüchen 1 - 4, dadurch gekennzeichnet, daß Rohrleitungen mit Normweiten von 50 bis 250 mm durchstrahlt werden.

6. Verfahren nach den Ansprüchen 1 - 5, dadurch gekennzeichnet, daß Strahlungsquelle und Film in einem möglichst kurzen Abstand zum äußeren Schnittpunkt zwischen Rohrleitung und Auflagevorrichtung bzw. dem Kontaktpunkt Rohrschelle/Rohrleitung angebracht werden.

7. Verfahren nach den Ansprüchen 1 - 6, dadurch gekennzeichnet, daß die Strahlungsquelle bzw. der Strahlungsquellenbehälter mit einer justierbaren Haltevorrichtung in die Strahlungsposition gebracht wird.

8. Verfahren nach den Ansprüchen 1 - 6, dadurch gekennzeichnet, daß der Film mit einer justierbaren Haltevorrichtung in die Bestrahlungsposition gebracht wird.

9. Verfahren nach den Ansprüchen 1 - 8, dadurch gekennzeichnet, daß die Restrohrwanddicke aufgrund der Durchstrahlungs-Aufnahmen errechnet wird.

10. Verfahren nach den Ansprüchen 1 - 9, dadurch gekennzeichnet, daß der Auflagebereich durchstrahlt wird, in dem die Rohrleitung in einer Rohrschelle aufliegt.

11. Vorrichtung zur Ermittlung von Korrosion durch Durchstrahlung von auf Auflagevorrichtungen aufliegenden oder in Rohrschellen liegenden Rohrleitungen, im Bereich der Auflagestellen, mit $\gamma$- und/oder Röntgen-Strahlen und üblicher Belichtung eines Films oder eines sonstigen Strahlungsempfängers durch die $\gamma$-Strahlen und/oder Röntgenstrahlen, dadurch gekennzeichnet, daß

a, die $\gamma$- und/oder Röntgen-Strahlenquelle auf einer Seite der Rohrleitung seitlich von der Auflagevorrichtung angebracht ist und auf der anderen Seite der Rohrleitung auf der gegenüberliegende Seite der Auflagevorrichtung ein zu belichtender Film angebracht ist, wobei die zentrale Verbindungslinie zwischen $\gamma$- und/oder RöntgenStrahlenquelle und Film mit der Rohrleitungslängsachse einen Winkel von 30° bis 75° bildet;

daß der Strahler in einer derartigen vertikalen Position zur Auflagefläche angebracht ist, daß sich die Unterkante des Strahlers bis zu 0,5 D unterhalb der Auflagefläche bis 1 D oberhalb der Auflagefläche befindet, bevorzugt bis zu 0,25 D unterhalb bis 0,5 D oberhalb der Auflagefläche befindet, wobei D der Durchmesser des Strahlers ist;

daß sich der Film gegenüber in einer solchen Position befindet, daß ein Bild ausreichender Schwärzung entsteht;

daß sich Strahlungsquelle und/oder Film maximal 100 cm, bevorzugt < 50 cm von dem äußeren Schnittpunkt von Auflagefläche und Rohrleitung entfernt befinden und daß zur bevorzugten Aufnahme von mindestens zwei Bildern, bei der ersten Aufnahme die angegebene Anordnung vorliegt und bei dem zweiten Bild sich Strahlungsquelle und der Film auf der gleichen Rohrseite jedoch auf der gegenüberliegenden Seite der Auflagestelle befinden oder bei der sich die Strahlungsquelle und der Film auf der jeweils gegenüberliegenden Seite der Rohrlei tung und auf der gegenüberliegenden Seite der Auflagevorrichtung befinden und

b, die $\gamma$ - und/oder Röntgen-Strahlenquelle auf einer Seite der Rohrleitung seitlich von der Rohrschelle angebracht ist und auf der anderen Seite der Rohrleitung auf der gegenüberliegenden Seite der Rohrschelle ein zu belichtender Film angebracht ist, wobei die zentrale Verbindungslinie zwischen $\gamma$- und/oder Röntgen-Strahlenquelle und Film mit der Rohrleitungslängsachse einen Winkel von 30° bis 75°, bevorzugt 50° bis 70° bildet; der Strahler in einer derartigen Position zum zu prüfenden Rohrschellenbereich angebracht ist, daß die Mitte des Strahlers bis zu 25 D in Richtung der Verbindungslinie Rohrwand/Rohrschelle unterhalb der inneren Rohrschellenfläche bis 25 D oberhalb der inneren Rohrschellenfläche angebracht ist, bevorzugt bis zu 10 D unterhalb bis zu 10 D oberhalb der inneren Rohrschellenfläche angebracht ist, wobei D der Durchmesser des Strahlers ist;

der Film in einer solchen Position angebracht ist, daß ein Bild ausreichender Schwärzung entsteht; Strahlungsquelle und/oder Film maximal 100 cm, bevorzugt < 50 cm von dem Kontaktpunkt Rohrschelle/Rohrleitung entfernt, angebracht ist;

in Abhängigkeit von der Breite der Rohrschelle in Fällen breiterer Rohrschellen zur bevorzugten Aufnahme von mindestens zwei Bildern bei der ersten Aufnahme die angegebene Vorrichtung vorliegt und bei dem zweiten Bild Strahlungsquelle und Film auf der gleichen Seite der Rohrleitung jedoch auf der gegenüberliegenden Seite der Rohrschelle angebracht sind oder bei der die Strahlungsquelle und der Film auf der jeweils gegenüberliegenden Seite der Rohrleitung und auf der gegenüberliegenden Seite der Rohrschelle angebracht sind.

12. Vorrichtung nach Anspruch 11, dadurch gekennzeichnet, daß die Strahlenquelle eine $\gamma$-Strahlenquelle ist.

13. Vorrichtung nach den Ansprüchen 11 und 12, dadurch gekennzeichnet, daß sich an der Austrittsseite der - und/oder Röntgen-Strahlen eine Röntgenfilm-Verstärkerfolien-Kombination befindet.

14. Vorrichtung nach den Ansprüchen 11 - 13, dadurch gekennzeichnet, daß Strahlungsquelle bzw. Strahlungsquellenbehälter und Film mit einer justierbaren Haltevorrichtung in Bestrahlungsposition angebracht sind.

15. Verfahren nach Anspruch 1a, dadurch gekennzeichnet, daß die Strahlungsquelle nahe an der Auflagestelle angebracht ist.

Figur 1

Figur 2

75°

(9)　(7)

(1)

(6)　(8)

30°

(2)

(5)

(4)

(3)

**POOR QUALITY**

Figur 3

52°

(10)

100 cm

Figur 4

(2)

(1)

(4)

(5)

(3)

Figur 5

(3)

(5)

(4)

(1)

(2)

Figur 6

**POOR QUALITY**